# EUROPÄISCHE PATENTSCHRIFT

(11) **EP 4 623 178 B1**
(45) Veröffentlichungstag und Bekanntmachung des Hinweises auf die Patenterteilung: **24.06.2026**
(21) Anmeldenummer: 23808722.5
(22) Anmeldetag: 14.11.2023
(51) Int. Cl.: E06B 3/663, C03C 27/10

(54) **ISOLIERGLASELEMENT, KÜHLMÖBEL MIT DIESEM UND VERFAHREN ZUM HERSTELLEN EINES ISOLIERGLASELEMENTES**
INSULATING GLASS ELEMENT, REFRIGERATION UNIT HAVING SAME AND METHOD FOR PRODUCING AN INSULATING GLASS ELEMENT
ÉLÉMENT EN VERRE ISOLANT, UNITÉ DE RÉFRIGÉRATION COMPRENANT CELUI-CI ET PROCÉDÉ DE PRODUCTION D'UN ÉLÉMENT EN VERRE ISOLANT

(30) Priorität: 22.11.2022 DE 102022130805
(43) Veröffentlichungstag der Anmeldung: 01.10.2025
(73) Patentinhaber: Schöba GmbH, 9861 Grabfeld OT Queienfeld (DE)
(72) Erfinder: BAYER, Klaus, Peter, 71726 Benningen (DE); HÖFNER, Achim, 98631 Grabfeld OT Queienfeld (DE)
(74) Vertreter: Engel, Christoph Klaus
(86) Internationale Anmeldenummer: PCT/EP2023/081733
(87) Internationale Veröffentlichungsnummer: WO 2024/110251

(56) Entgegenhaltungen:
- WO-A1-2018/054427
- GB-A- 2 144 167
- US-A1- 2021 396 070

## Beschreibung

Die vorliegende Erfindung betrifft ein Isolierglaselement, welches bevorzugt aber nicht ausschließlich in Kühlmöbeln einsetzbar ist. Weiterhin betrifft die Erfindung ein Kühlmöbel mit solch einem Isolierglaselement sowie ein Verfahren zum Herstellen eines Isolierglaselements.

Es sind Isolierglasscheiben bekannt, welche beispielsweise in Kühlmöbeln eingesetzt werden. Für diese Isolierglasscheiben werden Verbindungswerkstoffe, wie Spacer oder Kleber von unterschiedlichen Qualitäten oder mit unterschiedlichen Eigenschaften verwendet, um zwei oder mehr parallel beabstandet liegende Flachglasscheiben an ihren Rändern miteinander zu verbinden. Auch kommen zum Erzeugen dieser Isolierglasscheiben unterschiedliche Technologien zum Einsatz.

Als Kühlmöbel werden nachfolgend Behältnisse zur gekühlten Aufbewahrung und Präsentation von Erzeugnissen angesehen, wobei die Innentemperatur im Kühlmöbel zwischen 0°C und 10°C, vorzugsweise im Bereich 3°C bis 7°C liegt und die Umgebungstemperatur im Bereich 15°C bis 30°C liegt, insbesondere zwischen 18°C und 25°C. Die Temperaturdifferenz an den Isolierglaselementen zwischen der gekühlten Innenseite und der nicht gekühlten Außenseite wird somit regelmäßig im Bereich zwischen 10 K bis 20 K liegen. Im Innenraum von derartigen Kühlmöbeln sollen insbesondere keine Temperaturen deutlich unterhalb des Gefrierpunktes erreicht werden.

In der EP 2 878 233 B1 ist ein Scheibenverbund beschrieben, der zwei Scheiben umfasst. Die Scheiben sind in einem Randbereich des Scheibenverbundes zumindest abschnittsweise ausschließlich mit Hilfe eines transparent ausgehärteten Klebers verbunden. Der Kleber ist auf Acryl- oder PU-Basis hergestellt.

Aus der DE 20 2015 009 499 U1 ist ein Isolierglaselement bekannt ,welches mindestens eine erste und eine zweite Glasscheibe umfasst, die mittels eines Abstandrahmens miteinander verbunden sind. Der Rahmen erstreckt sich horizontal und vertikal. Weiterhin weist das Isolierglaselement Randdichtungen auf. Mindestens eine vertikale Randdichtung ist transparent. Der Querschnitt des vertikalen Abstandhalters ist im Profil T-förmig.

Die DE 10 2012 106 200 A1 zeigt einen Kühlschrank mit Tür, wobei die Tür mehrfach verglast ist. Die Tür weist mindestens zwei voneinander beabstandete transparente Glasscheiben auf. Die Glasscheiben sind randseitig horizontal und vertikal mit jeweils zwei Abstandselementen verbunden. Die Abstandhalter sollen den Glasscheiben-Zwischenraum gasdicht verschließen, jedoch haben Untersuchungen gezeigt, dass diese Gasdichtigkeit unter gewöhnlichen Einsatzbedingungen des Kühlschranks nicht dauerhaft gewährleistet werden kann. Mindestens ein vertikales Abstandselement besteht aus einem transparenten Material um die Transparenz der Kühlschranktür zu erhöhen.

Die WO 2018/054427 A1 beschreibt ein Isolierglaselement für mehrscheibige Türen mit transparentem Randverbund. Zwischen einer Grundscheibe und einer Deckscheibe sind mindestens im senkrechten und im oberen waagerechten Randbereich Abstandhalter aus Glas angeordnet. Diese sogenannten Glasspacer sind mit EVA-Folienbändern an der Grundscheibe befestigt. Ein Problem der Nutzung solcher EVA-Folien besteht darin, dass lange Prozesszeiten und hohe -temperaturen erforderlich sind, um diese Verbindungen herzustellen. Dadurch können beispielsweise Kunststoff-Spacer nicht genutzt werden, da diese bei der Herstellung beschädigt oder unerwünscht verformt werden würden.

Die DE 10 2019 114 660 A1 zeigt ein Isolierglaselement, welches senkrecht verlaufende Glasabstandshalter besitzt.

Die FR 3 087 471 A1 beschreibt ein Isolierglaselement mit zwei Glasscheiben und Abstandshaltern, welches in Kühleinheiten zum Einsatz kommen kann. Die Abstandshalter können aus Glas bestehen, weisen aber eine vergleichsweise raue Oberfläche auf. Der Zwischenraum zwischen den Glasscheiben soll mit einem Gas befüllt werden. Die Glasabstandshalter sollen mit einem UV-aushärtenden Kleber, insbesondere einem Oligomer mit Acrylatfunktion befestigt werden.

Trotz der zahlreichen Vorschläge, die im Stand der Technik zur Herstellung von Isolierglaselementen für Kühlmöbel gemacht worden sind, konnten die Anforderungen in Bezug auf eine dauerhaft gute Isolationswirkung in der Praxis nicht zufriedenstellend mit einer zufriedenstellenden gestalterischen Ausführung solcher Elemente in Einklang gebracht werden. In vielen Fällen lässt die Dichtwirkung an den Verbindungsstellen zwischen den Doppelscheiben nach, sodass die eingefüllten Gase entweichen, wodurch sich die Isolationseigenschaften verschlechtern und die Gefahre eine Beschlagbildung durch Kondensationsfeuchte besteht. Diese Probleme bestehen vor allem bei der Verwendung transparenter Abstandshalter (Spacer).

Ausgehend vom Stand der Technik besteht die Aufgabe der vorliegenden Erfindung somit darin, ein verbessertes, mehrscheibiges Isolierglaselement bereitzustellen, welches es einem Nutzer erlaubt, ohne Einschränkungen bzw. Sichtbehinderungen hindurchzuschauen, bei gleichzeitig dauerhaft guter Wärmeisolation des Isolierglaselements. Bevorzugt soll das Sichtfeld auch im vertikalen Randbereich frei von Sichtbarrieren sein. Das Isolierglaselement soll sich vor allem für den Einsatz in Kühlmöbeln eignen und dauerhaft gasdichte Verbindungen zwischen seinen mehreren Scheiben sicherstellen. Schließlich soll die Erfindung dazu beitragen, die Herstellung derartiger Isolierglaselemente zu vereinfachen und für eine preiswerte Serienfertigung tauglich zu machen.

Erfindungsgemäß erfolgt die Lösung der Aufgabe durch ein Isolierglaselement gemäß dem beigefügten Anspruch 1, durch ein Kühlmöbel gemäß Anspruch 12 und ein Verfahren zum Herstellen eines solchen Isolierglaselements gemäß Anspruch 13.

Das erfindungsgemäße Isolierglaselement bildet einen Isolierglasscheibenverbund aus mindestens zwei Glasscheiben. Das Isolierglaselement umfasst eine Grundscheibe und eine Deckscheibe mit dazwischen befindlichem Zwischenraum. Der Zwischenraum ist vorzugsweise mit einem Gas geringer Wärmeleitfähigkeit gefüllt oder evakuiert. Das Isolierglaselement hat vorzugsweise eine rechteckige Form, sodass es zwei horizontal und zwei vertikal verlaufende Randbereiche aufweist (bezogen auf die Einbaulage des Isolierglaselements). Die Glasscheiben sind in den beiden vertikalen Randbereichen durch vertikale Abstandshalter aus transparentem Glas beabstandet. In mindestens einem der horizontalen Randbereiche ist ebenfalls ein aus transparentem Glas bestehender horizontaler Abstandshalter angeordnet; in dem zweiten horizontalen Randbereich ist ein Abstandhalter aus nicht transparentem Material oder alternativ aus transparentem Glas angeordnet. Die Abstandhalter verbinden die Glasscheiben, wobei jeweils zwischen den Glasscheiben und den aus Glas bestehenden Abstandhaltern ein durch UV-Strahlung ausgehärteter Kleber, vorzugsweise ein Acrylharz-Kleber angeordnet ist, wodurch ein Stoffschluss zwischen den Glasscheiben und dem Abstandhalter aus Glas erfolgt. Ein anderer gebräuchlicher Begriff für Abstandhalter in Isolierglasscheiben ist Spacer.

Erfindungsgemäß ist an jedem Ende der vertikalen Abstandhalter jeweils eine quer zu seiner Längsrichtung verlaufende Nut eingebracht. In die Nut greift jeweils ein Ende eines der horizontalen Abstandhalter ein. Die Enden der vertikalen Abstandhalter sind in der zugeordneten Nut der horizontalen Abstandhalter form- und stoffschlüssig befestigt, insbesondere durch einen durch UV-Strahlung ausgehärteten Kleber verklebt.

Ein Vorteil der Erfindung ist, dass durch die form- und stoffschlüssige Verbindung zwischen den Abstandhaltern eine hohe Stabilität erreicht wird, die auch bei Temperaturdifferenzen und mechanischen Belastungen keine hohen Materialspannungen innerhalb des aus den Abstandhaltern bestehenden Abstandrahmens entstehen lässt. Damit werden zu hohe Beanspruchungen an den Dichtstellen des Isolierglaselements vermieden, sodass über einen langen Zeitraum die Dichtheit des Zwischenraums zwischen den Glasscheiben sichergestellt ist. Ein weiterer Vorteil besteht darin, dass der Abstandrahmen vorgefertigt werden kann und dann als solcher zwischen den Glasscheiben exakt positionierbar ist. Dies erhöht die Fertigungsgenauigkeit und beschleunigt den Herstellungsprozess deutlich.

Die aus Glas bestehenden Abstandhalter sind vorzugsweise aus Kalk-Natron-Glas gefertigt. Wenn einer der horizontal Abstandhalter nicht aus Glas besteht, so ist er bevorzugt aus Kunststoff, Edelstahl, Aluminium oder einer Kombination aus diesen Materialien gefertigt.

Gemäß einer bevorzugten Ausführungsform umfasst mindestens einer der Abstandhalter ein sogenanntes Molekularsieb, welches bekanntermaßen durch ein Trocknungsmittel ausgebildet ist. Das Trocknungsmittel ist bevorzugt in einem Hohlraum des horizontalen Abstandhalters eingebracht. Ein wesentlicher Vorteil dieser Ausführungsform besteht darin, dass einerseits in vertikaler Richtung vollständig transparente Isolierglaselemente bereitgestellt werden können, die gleichzeitig dauerhaft die unerwünschte Kondensation von Feuchtigkeit im Hohlraum zwischen den Glasscheiben vermeiden, denn in den horizontalen Randbereichen können Abstandhalter mit integrierten Molekularsieben angeordnet werden, wobei außerdem ein sehr einfacher Herstellungsprozess sichergestellt werden kann. Insbesondere sind kurze Prozesszeiten und geringe Prozesstemperaturen ausreichend, sodass z. B. Kunststoff-Spacer in den horizontalen Randbereichen möglich sind.

Vorzugsweise bestehen alle vier Abstandshalter aus transparentem Glas, insbesondere aus Kalk-Natron-Glas. Alternativ bevorzugt ist in einem vertikalen Randbereich ein zweiter Abstandhalter aus transparentem Glas und in dem einen horizontalen Randbereich ein erster Abstandhalter aus nicht transparentem Material, insbesondere Kunststoff, Edelstahl oder Aluminium angeordnet.

Die Grundscheibe und die Deckscheibe sind aus Flachglas, bevorzugt aus Floatglas. Vorzugsweise ist das Flachglas ein Kalk-Natron-Glas. Besonders bevorzugt ist das Flachglas ein Kalk-Natron-Silikatglas. Alternativ kann das Flachglas auch ein Borosilikatglas sein.

Bevorzugt sind die Grundscheibe und/oder die Deckscheibe als ein Einscheiben-Sicherheitsglas gestaltet. Alternativ sind die Grundscheibe und/oder die Deckscheibe als ein Verbund-Sicherheitsglas gestaltet. Auch andere Glasarten sind als Grundscheibe oder Deckscheibe denkbar.

Vorzugsweise haben die Glasscheiben eine Dicke von 2 mm bis 24 mm. Besonders bevorzugt sind die Glasscheiben, nämlich die Grundscheibe und die Deckscheibe, 4 mm dick.

Um einen sicheren Verbund des Isolierglaselements zu gewährleisten, sind die Glaskanten der Glasscheiben matt oder poliert geschliffen. Vorzugsweise weisen die Glaskanten der Glasscheiben einen C-Schliff oder einen F-Schliff (flache Kante beidseitig gefast) auf.

In einer Ausführungsform ist die Grundscheibe einseitig oder beidseitig entspiegelt. Alternative oder weitere Beschichtungen sind denkbar.

Auf der Grundscheibe ist vorzugsweise eine einseitige Low-E Beschichtung zur Emissivitätsbeeinflussung aufgebracht. Die Low-E Beschichtung ist auf der Grundscheibenseite, welche zum Zwischenraum hin liegt, aufgebracht, wobei die Randbereiche von der Beschichtung ausgespart sind.

In abgewandelten Ausführungsformen kann das Isolierglaselement auch drei oder mehr Scheiben umfassen, wenn dies für noch höhere Anforderungen an Wärmeisolation und/oder Stabilität gewünscht ist. In einer Ausführungsform ist eine oder mehrere weitere Glasscheiben jeweils zwischen der Grundscheibe und der Deckscheibe angeordnet.

In einem der Abstandhalter kann vorzugsweise mindestens ein Einfüllstutzen integriert sein, wobei der Einfüllstutzen nach einer Befüllung des Zwischenraums mit Gas mittels eines Pfropfens oder dergleichen verschlossen wird. Bevorzugte Ausführungsformen besitzen zwei derartige Einfüllstutzen, um während des Befüllens des Zwischenraums gleichzeitig den Füllstand bzw. die Konzentration eines Inertgases messen zu können. Ebenso können in mindestens einem der Abstandhalter Montageelemente, beispielsweise Lagerbuchsen oder -zapfen eingearbeitet sein.

Vorzugsweise ist die Querschnittsform der aus transparentem Glas bestehenden Abstandhalter rechteckig oder quadratisch, wobei die Kanten bevorzugt gefast sind. Gemäß einer besonders bevorzugten Ausführungsform sind die aus Glas bestehenden Abstandhalter jeweils als ein Kalk-Natron-Glasstab gebildet, dessen zu den Scheiben gewandete Flächen poliert oder geschliffen sind. Insbesondere sollen diese Flächen eine hohe Ebenheit besitzen, vorzugsweise mit Oberflächentoleranzen von etwa 200 µm oder weniger und ohne Verwindung in der Längsachse.

Als Verbindungswerkstoff zwischen den Glasscheiben und zumindest den aus Glas bestehenden Abstandhaltern kommt ein spezifischer Kleber zum Einsatz, welcher durch UV-Strahlung ausgehärtet ist. Der Kleber ist vorzugsweise ein Acrylharz-Kleber und ist zumindest nach dem Aushärten transparent. Er dient der stoffschlüssigen Verbindung zwischen den Glasscheiben und den Abstandhaltern aus transparentem Glas. Durch Verwendung des Abstandhalters aus transparentem Glas in Kombination mit den Glasscheiben und dem transparenten Kleber wird einem Nutzer vorteilhafterweise ein freies Sichtfeld durch das Isolierglaselement auch in den vertikalen Randbereichen ermöglicht.

Unter Verwendung mehrerer aneinandergereihter erfindungsgemäßer Isolierglaselemente können daher große Sichtfronten aufgebaut werden, die nicht durch nicht-transparente Abschnitte unterbrochen sind. Das erfindungsgemäße Isolierglaselement hat weiterhin den Vorteil, dass es beim Einsatz in Kühlmöbeln Energie spart im Vergleich zu Kühlmöbeln ohne Isolierglasscheibe. Weiterhin weist es im Vergleich zum Stand der Technik geringere Herstellungskosten auf.

Gemäß einer bevorzugten Ausführungsform ist der UV-härtende Acrylharz-Kleber, mit welchem die Verbindung zwischen Glasscheiben und zwischenliegendem Abstandshalter herstellbar ist, ein aus folgenden Komponenten bestehender Kleber: 2-Ethylhexylacrylat, Acrylsäure, Methyl-Methalacrylat und 4-Methoxyphenol. Ein solcher Acrylharz-Kleber ist u.a. bei der Firma Kömmerling chemische Fabrik GmbH unter dem Namen "Ködiguard UV-HS R" erhältlich. Die mit dem Acrylharz-Kleber erreichbaren Haftkräfte lehnen sich an die Anforderungen DIN 1279 Teil 4 an, die Gasdichtigkeit lehnt sich an die Anforderungen der DIN 1279 Teil 5 an. Der Kleber ist feuchtigkeitsresistent, besitzt jedenfalls nach dem Aushärten Transparenz und zeigt auch nach langer Benutzung keine Vergilbung. Bei der Herstellung der Verbindung dringt der Kleber in die Glasoberfläche ein.

Eine besonders bevorzugte Ausführungsform verwendet für die Befestigung der Enden der horizontalen Abstandshalter in den Nuten der vertikalen Abstandshalte einen UV-aushärtenden Acrylharz-Kleber, vorzugsweise einen Kleber mit der Handelsbezeichnung Köa Clear 2044 (Firma Kömmerling), womit eine Primärdichtung gebildet ist. Weiterhin wird bevorzugt ein zweiter Kleber verwendet, für die Verbindung zwischen den Abstandshaltern und den Glasscheiben, der eine Sekundärdichtung bildet, wobei insbesondere ein UV-aushärtender, transparenter Kleber mit der Handelsbezeichnung Dynamax 4-20260-VLV oder alternativ ein silanhaltiger Kleber eingesetzt wird. Der silanhaltige Kleber umfasst folgende Bestandteile: Isopropanol, Vinylsilan, Mercaptosilan, Alu-Komplex, Wasser und Methoxyphenol.

Bei einer abgewandelten Ausführungsform kann der einer der beiden horizontalen Abstandhalter aus Kunststoff, Edelstahl, Aluminium oder dergleichen bestehen und mittels eines Klebers oder Verbindungswerkstoffs aus Butyl mit den Glasscheiben stoffschlüssig verbunden werden. Der Verbindungswerkstoff bildet bevorzugt eine erste Barriere bzw. eine erste Dichtung zwischen dem ersten Abstandhalter und den Glasscheiben. Zur Versiegelung der ersten Dichtung, ist vorzugsweise eine zweite Dichtung am äußeren horizontalen Randbereich aufgebracht. Die zweite Dichtung besteht vorzugsweise aus einem Versiegelungswerkstoff in Form von Polysulfit.

Gemäß einer alternativen Ausführungsform wird für die Verbindung zwischen dem Abstandhalter aus nicht-transparentem Material und den beiden Glasscheiben der gleiche durch UVaushärtbare Acrylharz-Kleber angeordnet, wie zwischen den aus transparentem Glas bestehenden Abstandhaltern und den Glasscheiben. In einer abgewandelten Ausführungsform wird für die Verbindung zwischen dem Abstandhalter aus nicht-transparentem Material und den beiden Glasscheiben ein anderer durch UV-Strahlung aushärtbare Acrylharz-Kleber verwendet als für die Befestigung der transparenten Abstandhalter. Die Verwendung von durch UV-Strahlung aushärtbaren Acrylharz-Klebern auch am nicht-transparenten Abstandhalter bietet den Vorteil, dass in einem gemeinsamen Arbeitsschritt mithilfe desselben Klebstoffs unterschiedliche Abstandhalter befestigt werden können.

In dem Zwischenraum zwischen Grundscheibe und Deckscheibe ist bevorzugt ein Gas eingebracht, wobei das Gas vorzugsweise ein Edelgas ist. Beispielsweise ist das Edelgas Argon oder Krypton. Der Zwischenraum wirkt isolierend, sodass das Isolierglaselement eine gute Isolation bzw. Wärme-/Kältedämmung besitzt. Bei den Ausführungsformen mit einer oder mehreren weiteren Glasscheiben zwischen der Grundscheibe und der Deckscheibe sind vorzugsweise alle Zwischenräume mit Gas, insbesondere dem gleichen Gas, gefüllt.

Es kann eine dritte Dichtung im horizontalen Randbereich angeordnet sein, wobei die dritte Dichtung vorzugsweise aus Polyurethan ist. Durch die Dichtungen, insbesondere die erste und die zweite Dichtung, ist das Isolierglaselement gasdicht und feuchtigkeitsresistent.

Bevorzugt besitzen alle vertikalen Abstandhalter den gleichen Querschnitt. Ebenso bevorzugt, besitzen alle horizontalen Abstandhalter den gleichen Querschnitt. Insbesondere bevorzugt besitzen sämtliche Abstandhalter die gleiche Dicke, sodass der Abstand zwischen den Glasscheiben überall gleich ist. Geringe Dickenunterschiede zwischen den vertikalen und horizontalen Abstandhaltern können beispielsweise durch unterschiedlich dick aufgetragenen UV-aushärtenden Acryl-Kleber ausgeglichen werden.

Das erfindungsgemäße Isolierglaselement ist bevorzugt in Kühlmöbeln einsetzbar, wodurch für Nutzer ein sehr gutes Sichtfeld auf in dem Kühlmöbel befindliche Produkte ermöglicht wird.

Das erfindungsgemäße Kühlmöbel weist mindestens ein erfindungsgemäßes Isolierglaselement auf, wobei das Isolierglaselement dem zuvor beschriebenen Isolierglaselement mit all seinen Ausführungsformen entspricht. Vorzugsweise besitzt das Kühlmöbel mehrere solcher Isolierglaselemente, die nebeneinander angeordnet sind, wobei jeweils die vertikalen Randbereiche, an denen transparente zweite Abstandhalter angeordnet sind, aneinander angrenzen. Insbesondere kann das erfindungsgemäße Isolierglaselement als Kühlmöbeltür bzw. Glastür verwendet werden.

Um das sehr gute Sichtfeld zu erhalten kann ein an dem Isolierglaselement angebrachtes Element zum Öffnen der Kühlmöbeltür ebenfalls transparent ausgebildet sein.

Das erfindungsgemäße Verfahren zum Herstellen eines zuvor beschriebenen Isolierglaselements mit all seinen Ausführungsformen umfasst mehrere Verfahrensschritte.

In einem Verfahrensschritt werden eine Grundscheibe und eine Deckscheibe bereitgestellt und gereinigt. Bevorzugt wird die Grundscheibe auf einem Montagerahmen oder Montageband angeordnet, je nach gewünschter Produktionsmenge. Vorzugsweise wird der vertikale Randbereich nicht vom Montagerahmen tangiert.

In einem dazu ggf. parallel oder auch zuvor auszuführenden Verfahrensschritt wird ein aus mindestens vier Abstandhaltern zusammengesetzter Rahmen erzeugt. Dazu wird zunächst an den Enden der vertikalen Anstandshalter, die aus Glas bestehen, jeweils eine Nut eingebracht. Die Breite der Nut entspricht der Dicke der horizontalen Abstandhalter, welche zwischen den vertikalen Abstandhaltern verlaufen. Die Enden der horizontalen Abstandhalter werden dann in diesen Nuten stoff- und formschlüssig sowie gasdicht mit einem ersten durch UV-Strahlung aushärtenden Acrylharz-Kleber befestigt. Somit kann der aus den Abstandhaltern zusammengesetzte Rahmen komplett vorgefertigt werden, unabhängig von den Glasscheiben (Grund- und Deckscheibe). Dies gestattet einen ökonomischeren und technologisch verbesserten Produktionsablauf.

In einem weiteren Verfahrensschritt wird eine Beschichtung aus einem zweiten durch UV-Strahlung aushärtenden Acrylharz-Kleber auf die Berührungsflächen zwischen dem aus Abstandshaltern zusammengesetzten Rahmen und den Glasscheiben aufgebracht. Bevorzugt werden die Berührungsflächen der nicht aus Glas bestehenden Abstandshalter zuvor mit Butyl GD 115 oder einem ähnlichen die Benetzung fördernden Hilfsmittel benetzt.

In einem weiteren Verfahrensschritt wird der aus Abstandshaltern zusammengesetzte Rahmen zwischen den Glasscheiben positioniert, zunächst durch Auflegen des Rahmens auf der Grundscheibe. Die vertikalen Abstandhalter werden vorzugsweise mit einem Abstand von etwa 1 mm zum Rand der Glasscheibe positioniert. In einem weiteren Teilschritt wird die Deckscheibe auf den Rahmen aus Abstandhaltern aufgelegt, wobei die Deckscheibe kongruent zur Grundscheibe positioniert wird. Es verbleibt somit ein Zwischenraum zwischen den beiden Glasscheiben, welcher durch den Rahmen eingeschlossen ist. Der zweite Acrylharz-Kleber kann beispielsweise durch eine Kanüle, durch Sprühen o.ä. auf die Berührungs- bzw. Klebeflächen aufgetragen werden, bevor die Scheiben mit den Abstandhaltern kontaktiert werden.

In jedem Fall ist es vorteilhaft, wenn eine vollflächige Verteilung des Klebers auf den zwischen Abstandhaltern und Scheiben entstehenden Klebekontaktflächen erfolgt, vorzugsweise durch Osmose und Adhäsion bzw. Kapillarwirkung.

Anschließend wird der zweite Acrylharz-Kleber mittels UV-Strahlung ausgehärtet, sodass eine stoffschlüssige Verbindung zwischen der Grundscheibe, den Abstandhaltern sowie der Deckscheibe entsteht.

In mindestens einem der Abstandhalter ist mindestens ein Gaseinfüllstutzen angeordnet, besonders bevorzugt zwei Gaseinfüllstutzen, ggf. in gegenüberliegenden Abstandhaltern. In einem weiteren Verfahrensschritt wird der Zwischenraum zwischen den Schreiben mit einem Gas durch den Gaseinfüllstutzen befüllt und dieser anschließend beispielsweise mit einem Pfropfen verschlossen. Die Gasbefüllung erfolgt vorzugsweise mit einem Edelgas, beispielsweise mit Argon. Der Füllgrad in dem Zwischenraum sollte bei mindestens 90% liegen (DIN 1279). Um einen solchen Füllgrad zu erreichen, sind vorzugsweise zwei Füllstutzen vorgesehen, sodass während des Einfüllens des Edelgases über den ersten Gaseinfüllstutzen, die im Zwischenraum zunächst enthaltene Umgebungsluft aus dem zweiten Gaseinfüllstutzen entweichen kann.

Wenn in einer abgewandelten Ausführungsform ein Abstandhalter aus einem nicht-transparenten Material besteht, kann dieser und mit einem Molekularsieb ausgerüstet werden, welches als ein Trocknungsmittel dient. Der aus einem nicht-transparenten Material bestehende Abstandshalter wird generell eine etwas geringe Dicke als die aus Glas bestehenden Abstandshalter aufweisen, da die Butylschicht zur Befestigung des nicht-transparenten Abstandshalters dicker als der Klebstoff zur Befestigung der Glas-Abstandshalter ausgelegt ist.

In einer Ausführungsform werden in einem weiteren Verfahrensschritt die Randbereiche versiegelt. Die äußeren Kanten werden mit Polysulfit, insbesondere Polysulfit GD 116 befüllt, was als Dichtung fungiert. Nach dem Aushärten werden die Polysulfitkanten geglättet und gesäubert.

In einer Ausführungsform werden an den horizontalen Kanten Klammern zum ergänzenden kraftschlüssigen Verbinden der Glasscheiben angebracht. Weiterhin können einzelne Abschnitte durch eine Butylversiegelung verschlossen werden.

Das derart beschaffene Isolierglaselement zeigt eine hohe Langzeitfestigkeit. Durch den beschriebenen Einsatz der Klebstoffe lassen sich Abzugskräfte deutlich über 85 kN erreichen. Die vor allem bei Kühlmöbeln gewünschte Transparenz bleibt ohne Beeinträchtigung, auch über lange Zeit, da die benannten Klebstoffe und die aus Glas bestehenden Abstandhalter keine Vergilbung zeigen. Ebenso sind hohe UV-Beständigkeit, Gasdichtigkeit und Feuchtigkeitsresistenz gewährleistet. Somit wird eine hohe Systemverträglichkeit erreicht.

Weitere Vorteile und Einzelheiten der vorliegenden Erfindung ergeben sich aus der nachfolgenden Beschreibung bevorzugter Ausführungsformen, unter Bezugnahme auf die Zeichnung. Es zeigen:
- Fig. 1: eine Frontalansicht sowie Seitenansicht eines erfindungsgemäßen Isolierglaselements;
- Fig. 2: eine vereinfachte perspektivische Darstellung einer ersten Ausführungsform des Isolierglaselements;
- Fig. 3: eine vereinfachte perspektivische Darstellung einer zweiten Ausführungsform des Isolierglaselements.

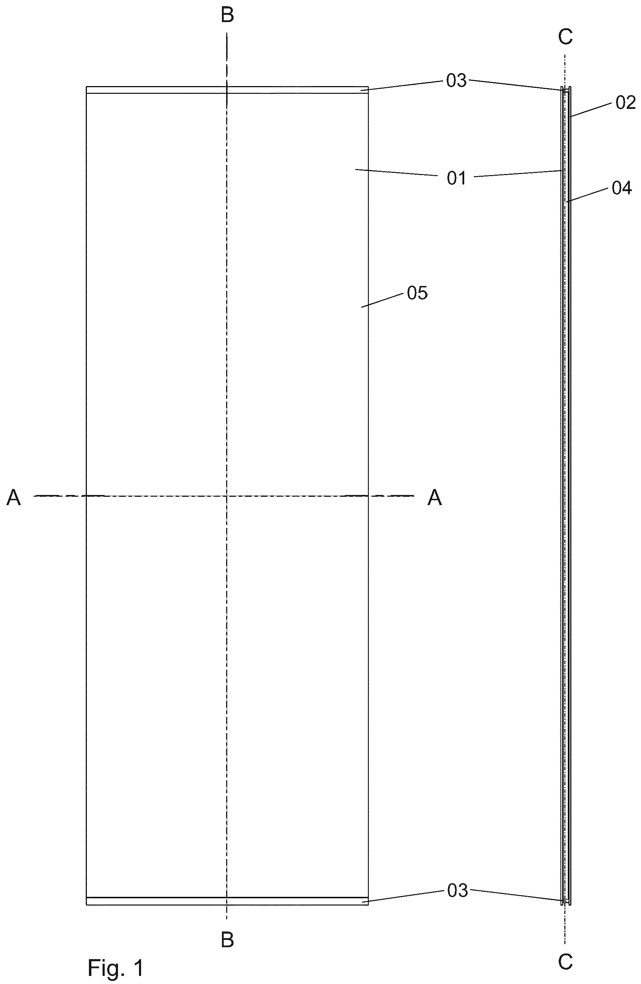

Fig. 1 zeigt eine Draufsicht und eine Seitenansicht eines erfindungsgemäßen Isolierglaselements, welches eine Grundscheibe 01 und eine dazu beabstandet angeordnete Deckscheibe 02 besteht. Die Glasscheiben 01, 02 bestehen aus Floatglas und können Beschichtungen aufweisen. In den beiden horizontalen Randbereichen der beiden Glasscheiben 01, 02 sind horizontale Abstandhalter 03 angeordnet, die in der gezeigten Ausführungsordnung beide aus transparentem Glas bestehen. Alternativ kann einer der horizontalen Abstandhalter aber auch aus nicht-transparentem Material, z. B. Kunststoff, Edelstahl oder Aluminium bestehen. Solche nicht-transparenten Abstandhalter sind aus dem Stand der Technik grundsätzlich bekannt, sodass sich eine detaillierte Beschreibung erübrigt.

Weiterhin weist das Isolierglaselement in den vertikalen Randbereichen jeweils einen vertikalen Abstandhalter 04 aus transparentem Glas auf. Die Transparenz der vertikalen Abstandhalter 04 muss auch an den zu den Scheiben gewandten Seitenflächen bestehen, um die Transparenz im vertikalen Randbereich zu gewährleisten. Alle vier Abstandhalter 03, 04 verbinden die beiden Glasscheiben 01, 02 miteinander und halten sie gleichzeitig auf Abstand, sodass zwischen den Glasscheiben 01, 02 ein Zwischenraum 05 ausgebildet ist. Der Zwischenraum 05 ist mit einem Gas, z. B. Argon, befüllt. Da hier alle vier Abstandhalter transparent sind, wird einem Nutzer des Isolierglaselements ein freies Sichtfeld durch die Glasscheiben 01, 02 ermöglicht.

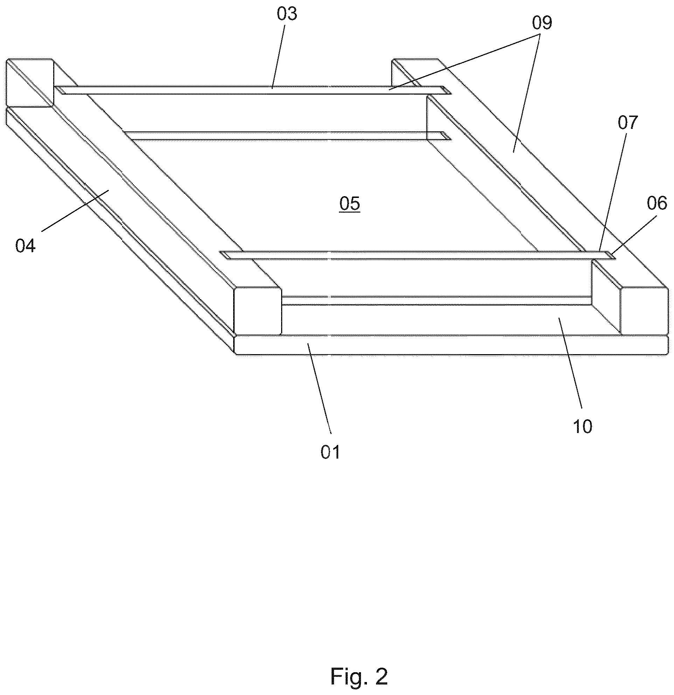

Fig. 2 zeigt eine perspektivische Ansicht einer ersten Ausführungsform des Isolierglaselements. Zur Vereinfachung sind nur die Grundscheibe 01 und die vier Abstandhalter 03, 04 dargestellt. Dies entspricht einem Verfahrensschritt bei der Herstellung vor dem Aufsetzen der der Deckscheibe auf die Abstandhalter. In einem vorgelagerten Fertigungsschritt wurde aus den vier Abstandhaltern ein kompletter Rahmen gefertigt. Bevorzugt ist an einem der Abstandhalter eine Molekularsiebtasche angeordnet (nicht gezeigt). Es ist ersichtlich, dass beispielsweise etwa 20 mm entfernt von den Enden der vertikalen Abstandhalter 04, Nuten 06 in die als Glasstäbe gebildeten Abstandhalter eingearbeitet sind. Die Nuten haben beispielsweise eine Breite von 7 oder 10 mm, entsprechend der Dicke der verwendeten horizontalen Abstandhalter, und eine Tiefe von 5 mm, sodass sie etwa 50% in die Breite der vertikalen Abstandhalter 04 eingegraben sind und sich über die gesamte Höhe der vertikalen Abstandhalter erstrecken. In diese Nuten 06 greifen die horizontalen Abstandhalter 03 mit ihren Enden formschlüssig ein und sind dort stoffschlüssig verklebt. Dazu wird in die Nuten 06 bevorzugt ein erster exotherm aushärtender Kleber angebracht, insbesondere der unter dem Handelsnamen Köra Clear 2044 verfügbare 2 Komponenten Kleber. Der erste Kleber bildet somit eine Primärdichtung zwischen den Abstandshaltern und dichtet damit den Zwischenraum 05 an den vier durch die Abstandshalter gebildeten schmalen Seiten ab.

Weiterhin wird ein zweiter Kleber 09 als eine Sekundärdichtung vorgesehen, vorzugsweise aus einem durch UV-Strahlung aushärtenden Kleber mit dem Handelsnamen "Dymax 4-20260-VLV". Diese Sekundärdichtung befindet sich zwischen den Abstandhaltern 03, 04 und den angrenzenden Glasscheiben 01, 02. Der zweite Kleber kann mittels einem Dosiersystem aufgetragen werden, um den Klebespalt zwischen den flächig befüllt

Alternativ kann als zweiter Kleber bzw. Sekundärdichtung ein silanhaltiger Kleber vorzugsweise mit folgender chemischen Zusammensetzung verwendet werden:

| | | |
|---|---|---|
| Bestandteil | Formel | Menge |
| Isopropanol | C₃H₈O | 300g für Molansatz |
| Vinylsilan | H₂C=CHSi(OC₂H₅)₃ | 1 Mol |
| Mercaptosilan | HS(CH₂)₃Si(OCH₃)₃ | 1 Mol |
| Alu-Komplex | C₁₂H₂₇AlO₃ | 0,07 Mol |
| Wasser | H₂O | 6 Mol |
| Methoxyphenol | C₇H₈O₂ | 0,2% |

Besonders bevorzugt wird zum Aushärten von Dymax eine UV-Hochdruck-Breitbandlampe mit einer elektrische Leistung von ca. 1200 Watt verwendet, welche auf Basis von Quecksilber/Eisen arbeitet. Demgegenüber kann Silan mit einer UV-Mitteldruck-Breitbandlampe ausgehärtet werden, mit einer Leistung von ca. 350 Watt.

Nachdem die Grundscheibe 01 und die Deckscheibe 02 mit dem durch die Abstandhalter 03, 04 gebildeten Rahmen verklebt sind und er Kleber ausgehärtet ist, kann der Zwischenraum 05 mit einer beispielsweise 95% Argon-Füllung befüllt werden. Zwischen der Auß0enseite der horizontalen Abstandhalter 03 und der Kante der Glasscheiben verbleibt bei dieser Bauform ein Freiraum 10, der abschließen mit einer Versiegelung, vorzugsweise Polysulfit, gefüllt werden kann.

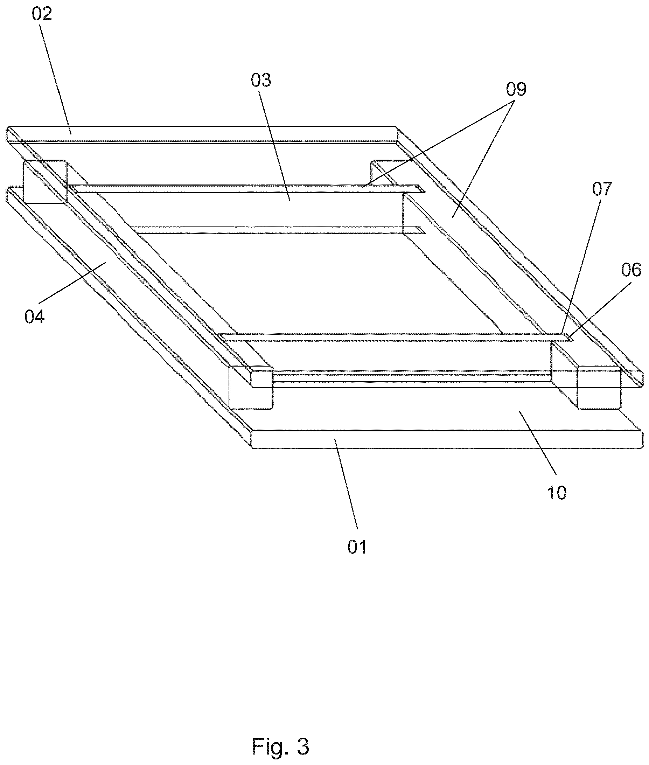

Fig. 3 zeigt eine perspektivische Ansicht einer zweiten Ausführungsform des Isolierglaselements. In dieser Darstellung sind sowohl die Grundscheibe 01 als auch die Deckscheibe 02 und die vier Abstandhalter 03, 04 dargestellt. Ein Unterschied zu der in Fig. 2 gezeigten Ausführungsform besteht darin, dass sich die vertikalen Abstandhalter 04 in Längsrichtung nicht bis zur Außenkante der Glasscheiben 01, 02 erstrecken sondern etwa 10 bis 20 mm vorher enden. Somit verbleibt Raum für die Anordnung von Rahmenelementen oder Scharnieren.

### Bezugszeichenliste

- 01: Grundscheibe
- 02: Deckscheibe
- 03: horizontaler Abstandhalter
- 04: vertikaler Abstandhalter
- 05: Zwischenraum
- 06: Nut
- 07: erster Acrylharz-Kleber
- 08: --
- 09: zweiter Acrylharz-Kleber
- 10: Freiraum

## Patentansprüche

1. Isolierglaselement, umfassend eine Grundscheibe (01) und eine Deckscheibe (02) mit dazwischen verbleibendem Zwischenraum (05), wobei die Glasscheiben (01, 02) zwei horizontale und zwei vertikale Randbereiche aufweisen, in denen sie über horizontale bzw. vertikale Abstandshalter (03, 04) beabstandet und stoffschlüssig verbunden sind, wobei die beiden vertikalen Abstandhalter (04) und mindestens einer der horizontalen Abstandshalter (03) aus transparentem Glas bestehen und mit den beiden Glasscheiben (01, 02) mit einem durch UV-Strahlung ausgehärteten Kleber (06) verbunden sind, **dadurch gekennzeichnet, dass** an jedem Ende der vertikalen Abstandhalter (04) jeweils eine quer zu seiner Längsrichtung verlaufende Nut eingebracht ist, in welche jeweils ein Ende eines der horizontalen Abstandhalter (03) eingreift und dort form- und stoffschlüssig befestigt ist.

2. Isolierglaselement nach Anspruch 1, **dadurch gekennzeichnet, dass** an mindestens einem der Abstandshalter ein Molekularsieb (08) angeordnet ist.

3. Isolierglaselement nach Anspruch 1 oder 2, **dadurch gekennzeichnet, dass** alle vier Abstandshalter (03, 04) aus transparentem Glas bestehen.

4. Isolierglaselement nach einem der Ansprüche 1 bis 3, **dadurch gekennzeichnet, dass** die distalen Kanten der Nuten in den vertikalen Abstandhaltern (04) vom Ende der Abstandshalter mindestens 10 mm und höchstens 25 mm beabstandet sind.

5. Isolierglaselement nach einem der Ansprüche 1 bis 4, **dadurch gekennzeichnet, dass** die Enden der horizontalen Abstandhalter (03) in den Nuten mit einem mit einem durch UV-Strahlung ausgehärteten Kleber, vorzugsweise mit einem exotherm aushärtenden 2-Komponenten-Kleber verklebt sind.

6. Isolierglaselement nach einem der Ansprüche 1 bis 5, **dadurch gekennzeichnet, dass** alle vier Abstandhalter (03, 04) zu einem vorgefertigten Rahmen fest verbunden sind, der bei der Herstellung des Isolierglaselements zwischen die beiden Glasscheiben (01, 02) einsetzbar ist.

7. Isolierglaselement nach einem der Ansprüche 1 bis 6, **dadurch gekennzeichnet, dass** die Glasscheiben (01, 02) als Floatglas bzw. Flachglas aus Kalk-Natron bestehen.

8. Isolierglaselement nach einem der Ansprüche 1 bis 7, **dadurch gekennzeichnet, dass** die vertikalen Abstandhalter (04) aus transparentem Glas stabförmig mit rechteckigem oder quadratischem Querschnitt ausgebildet sind, wobei die zu den Glasscheiben (01, 02) gerichteten Seitenflächen der Abstandhalter (04) transparent poliert sind.

9. Isolierglaselement nach einem der Ansprüche 1 bis 8, **dadurch gekennzeichnet, dass** zwischen den horizontalen Abstandhaltern (03) und den beiden Glasscheiben (01, 02) der gleichen durch UV-Strahlung ausgehärtete Acrylharz-Kleber (09) wie zwischen den vertikalen Abstandhalter (04) und den Glasscheiben (01, 02) angeordnet ist.

10. Isolierglaselement nach einem der Ansprüche 1 bis 9, **dadurch gekennzeichnet, dass** einer der horizontalen Abstandhalter (03) aus nicht-transparenten Material aus Kunststoff, Edelstahl, Aluminium oder einer Kombination dieser Materialien besteht.

11. Isolierglaselement nach einem der Ansprüche 1 bis 10, **dadurch gekennzeichnet, dass** die Grundscheibe (01) und/oder die Deckscheibe (02) ein Einscheiben- oder Verbund-Sicherheitsglas sind.

12. Kühlmöbel mit einer Kühlmöbeltür, die mindestens ein Isolierglaselement gemäß den Ansprüchen 1 bis 11 umfasst.

13. Verfahren zum Herstellen eines Isolierglaselements gemäß einem der Ansprüche 1 bis 11, wobei das Isolierglaselement eine Grundscheibe (01), eine Deckscheibe (02), zwei horizontale Abstandhalter (03) und zwei vertikale Abstandhalter (04) umfasst, wobei die beiden vertikalen und mindestens einer der horizontalen Abstandhalter aus einem transparenten Glas bestehen, folgende Schritte umfassend:
- Bereitstellen und Reinigen der Glasscheiben (01, 02);
- Erzeugen eines aus den vier Abstandhaltern (03, 04) zusammengesetzten Rahmens, wobei nahe an den Enden der vertikalen Abstandhalter (04) jeweils eine Nut (06) eingebracht wird, deren Breite der Dicke der horizontalen Abstandhalter (03) entspricht, und wobei die Enden der horizontalen Abstandhalter in diesen Nuten (06) stoff- und formschlüssig sowie gasdicht mit einem ersten durch UV-Strahlung aushärtenden Acrylharz-Kleber (07) befestigt werden;
- Aufbringen einer Beschichtung aus einem zweiten durch UV-Strahlung aushärtenden Acrylharz-Kleber (09) auf die Berührungsflächen zwischen dem aus Abstandshaltern zusammengesetzten Rahmen und den Glasscheiben;
- Positionieren des aus Abstandhaltern (03, 04) zusammengesetzten Rahmens zwischen den Glasscheiben (01, 02);
- Aushärten des zweiten Acrylharz-Klebers (09) mittels UV-Strahlung;
- Befüllung eines Zwischenraums (05), der zwischen den Glasscheiben (01, 02) verbleibt und vom Rahmen umfasst ist, mit einem Gas durch mindestens einen Gaseinfüllstutzen und anschließendes Verschließen des Gaseinfüllstutzens.

## Claims

1. An insulating glass element, comprising a base pane (01) and a cover pane (02) with an intermediate space (05) remaining therebetween, wherein the glass panes (01, 02) have two horizontal and two vertical edge regions, in which they are spaced apart and materially bonded via horizontal and vertical spacers (03, 04), wherein the two vertical spacers (04) and at least one of the horizontal spacers (03) consist of transparent glass and are connected to the two glass panes (01, 02) by means of an adhesive (06) cured by UV radiation, **characterized in that** at each end of the vertical spacers (04) a groove extending transversely to its longitudinal direction is formed, into which one end of one of the horizontal spacers (03) engages in each case and is fixed therein in a form-fitting and materially bonded manner.

2. The insulating glass element according to claim 1, **characterized in that** a molecular sieve (08) is arranged on at least one of the spacers.

3. The insulating glass element according to claim 1 or 2, **characterized in that** all four spacers (03, 04) consist of transparent glass.

4. The insulating glass element according to any one of claims 1 to 3, **characterized in that** the distal edges of the grooves in the vertical spacers (04) are spaced apart from the end of the spacers by at least 10 mm and at most 25 mm.

5. The insulating glass element according to any one of claims 1 to 4, **characterized in that** the ends of the horizontal spacers (03) in the grooves are adhesively bonded with an adhesive cured by UV radiation, preferably with an exothermically curing two-component adhesive.

6. The insulating glass element according to any one of claims 1 to 5, **characterized in that** all four spacers (03, 04) are firmly connected to form a prefabricated frame which can be inserted between the two glass panes (01, 02) during production of the insulating glass element.

7. The insulating glass element according to any one of claims 1 to 6, **characterized in that** the glass panes (01, 02) are formed as float glass or flat glass made of soda-lime glass.

8. The insulating glass element according to any one of claims 1 to 7, **characterized in that** the vertical spacers (04) are formed as rod-shaped members of transparent glass with a rectangular or square cross section, wherein the side surfaces of the spacers (04) facing the glass panes (01, 02) are transparently polished.

9. The insulating glass element according to any one of claims 1 to 8, **characterized in that** the same UV radiation-cured acrylic resin adhesive (09) is arranged between the horizontal spacers (03) and the two glass panes (01, 02) as between the vertical spacers (04) and the glass panes (01, 02).

10. The insulating glass element according to any one of claims 1 to 9, **characterized in that** one of the horizontal spacers (03) consists of a non-transparent material made of plastic, stainless steel, aluminium or a combination of these materials.

11. The insulating glass element according to any one of claims 1 to 10, **characterized in that** the base pane (01) and/or the cover pane (02) are a single-pane safety glass or laminated safety glass.

12. A refrigeration appliance with a refrigeration appliance door comprising at least one insulating glass element according to claims 1 to 11.

13. A method for producing an insulating glass element according to any one of claims 1 to 11, wherein the insulating glass element comprises a base pane (01), a cover pane (02), two horizontal spacers (03) and two vertical spacers (04), wherein the two vertical spacers and at least one of the horizontal spacers consist of transparent glass, comprising the following steps:
- providing and cleaning the glass panes (01, 02);
- producing a frame composed of the four spacers (03, 04), wherein in each case a groove (06) is formed near the ends of the vertical spacers (04), the width of which corresponds to the thickness of the horizontal spacers (03), and wherein the ends of the horizontal spacers are fixed in these grooves (06) in a materially bonded and form-fitting manner and in a gas-tight manner with a first UV radiation-curable acrylic resin adhesive (07);
- applying a coating of a second UV radiation-curable acrylic resin adhesive (09) to the contact surfaces between the frame composed of spacers and the glass panes;
- positioning the frame composed of spacers (03, 04) between the glass panes (01, 02);
- curing the second acrylic resin adhesive (09) by means of UV radiation;
- filling an intermediate space (05), which remains between the glass panes (01, 02) and is enclosed by the frame, with a gas via at least one gas filling nozzle and subsequently closing the gas filling nozzle.

## Revendications

1. Élément en verre isolant, comprenant une vitre de base (01) et une vitre de couverture (02), avec un espace intermédiaire (05) subsistant entre elles, les vitres en verre (01, 02) comportant deux zones de bordure horizontales et deux zones de bordure verticales, dans lesquelles elles ont assemblées par conjugaison de matières, en étant écartées par l'intermédiaire d'espaceurs (03, 04) horizontaux ou verticaux, les deux espaceurs (04) verticaux et au moins l'un des espaceurs (03) horizontaux étant constitués en un verre transparent et assemblés avec les deux vitres en verre (01, 02) par un agent adhésif (06) durci par rayonnement UV, **caractérisé en ce que** sur chaque extrémité des espaceurs (04) verticaux est ménagée chaque fois une rainure s'écoulant à la transversale de sa direction longitudinale, dans laquelle s'engage chaque fois une extrémité de l'un des espaceurs (03) horizontaux et y est fixée par complémentarité de forme et par conjugaison de matières.

2. Élément en verre isolant selon la revendication 1, **caractérisé en ce que** sur au moins l'un des espaceurs est placé un tamis moléculaire (08).

3. Élément en verre isolant selon la revendication 1 ou 2, **caractérisé en ce que** tous les quatre espaceurs (03, 04) sont constitués d'un verre transparent.

4. Élément en verre isolant selon l'une quelconque des revendications 1 à 3, **caractérisé en ce que** les arêtes distales des rainures dans les espaceurs (04) verticaux sont écartées de l'extrémité des espaceurs d'au moins 10 mm et d'au plus 25 mm.

5. Élément en verre isolant selon l'une quelconque des revendications 1 à 4, **caractérisé en ce que** les extrémités des espaceurs (03) horizontaux dans les rainures sont collées par un agent adhésif durci par rayonnement UV, de préférence par un adhésif bicomposants à durcissement exothermique.

6. Élément en verre isolant selon l'une quelconque des revendications 1 à 5, **caractérisé en ce que** tous les quatre espaceurs (03, 04) sont fixement assemblés en un cadre préfabriqué, qui lors de la fabrication de l'élément en verre isolant, sont insérables entre les deux vitres en verre (01, 02).

7. Élément en verre isolant selon l'une quelconque des revendications 1 à 6, **caractérisé en ce que** les vitres en verre (01, 02) sont constituées d'un verre flotté ou d'un verre plat sodocalcique.

8. Élément en verre isolant selon l'une quelconque des revendications 1 à 7, **caractérisé en ce que** les espaceurs (04) verticaux sont conçus en verre transparent, en forme de barres pourvues d'une section transversale rectangulaire ou carrée, les surfaces latérales des espaceurs (04) dirigées vers les vitres en verre (01, 02) étant transparentes polies.

9. Élément en verre isolant selon l'une quelconque des revendications 1 à 8, **caractérisé en ce qu'**entre les espaceurs (03) horizontaux et les deux vitres en verre (01, 02) est placé le même agent adhésif (09) en résine acrylique durci par rayonnement UV qu'entre les espaceurs (04) verticaux et les vitres en verre (01, 02).

10. Élément en verre isolant selon l'une quelconque des revendications 1 à 9, caractérisé en ce l'un des espaceurs (03) horizontaux est constitué d'une matière non transparente, en une matière plastique, un acier inoxydable, en aluminium ou en une association desdites matières.

11. Élément en verre isolant selon l'une quelconque des revendications 1 à 10, **caractérisé en ce que** la vitre de base (01) et / ou la vitre de couverture (02) sont un verre de sécurité à simple vitrage ou composite.

12. Meuble réfrigérant, pourvu d'une porte de meuble réfrigérant, qui comprend au moins un élément en verre isolant selon les revendications 1 à 11.

13. Procédé, destiné à fabriquer un élément en verre isolant selon l'une quelconque des revendications 1 à 11, l'élément en verre isolant comprenant une vitre de base (01), une vitre de couverture (02), deux espaceurs (03) horizontaux et deux espaceurs (04) verticaux, les deux espaceurs verticaux et au moins l'un des espaceurs horizontaux étant constitués d'un verre transparent, comprenant les étapes suivantes, consistant à :
- mettre à disposition et nettoyer les vitres en verre (01, 02) ;
- créer un cadre composé des quatre écarteurs (03, 04), à proximité des extrémités des espaceurs (04) verticaux étant ménagée chaque fois une rainure (06), dont la largeur correspond à l'épaisseur des espaceurs (03) horizontaux et les extrémités des espaceurs horizontaux étant fixées dans lesdites rainures (06) par conjugaison de matières et par complémentarité de forme, ainsi que de manière étanche aux gaz, par un premier agent adhésif (07) en résine acrylique durcissant par rayonnement UV ;
- appliquer un revêtement en un deuxième agent adhésif (09) en résine acrylique durcissant par rayonnement UV sur les surfaces de contact entre le cadre composé des espaceurs et les vitres en verre ;
- positionner le cadre composé d'espaceurs (03, 04) entre les vitres en verre (01, 02) ;
- faire durcir par rayonnement UV le deuxième agent adhésif (09) en résine acrylique ;
- remplir avec un gaz un espace intermédiaire (05) qui subsiste entre les vitres en verre (01, 02) et qui est entouré par le cadre via une tubulure de remplissage de gaz et fermer ensuite la tubulure de remplissage de gaz.
